Europäisches Patentamt

European Patent Office

Office européen des brevets

(11) Numéro de publication: **0 353 153**
A1

(12) **DEMANDE DE BREVET EUROPEEN**

(21) Numéro de dépôt: 89402128.6

(22) Date de dépôt: 26.07.89

(51) Int. Cl.5: **H 01 S 3/09**
H 01 S 1/00, H 05 H 7/04

(30) Priorité: 28.07.88 FR 8810195

(43) Date de publication de la demande:
**31.01.90 Bulletin 90/05**

(84) Etats contractants désignés: **DE GB**

(71) Demandeur: **COMMISSARIAT A L'ENERGIE ATOMIQUE
31/33, rue de la Fédération
F-75015 Paris (FR)**

(72) Inventeur: **Chevallier, Jacques
10 rue des Charmes aux Traits
F-21240 Talant (FR)**

(74) Mandataire: **Mongrédien, André et al
c/o BREVATOME 25, rue de Ponthieu
F-75008 Paris (FR)**

(54) **Dispositif d'oscillation et de guidage magnétiques de particules chargées, destiné à l'amplification d'un rayonnement électromagnétique.**

(57) Dispositif d'oscillation et de guidage magnétiques de particules chargées, destiné à l'amplification d'un rayonnement électromagnétique.

Il comprend une succession d'enroulements plans électriquement conducteurs ($E_i$, $E_{i+1}$,...) le long de l'axe (Z) correspondant à la trajectoire moyenne des particules. Chaque enroulement entoure cet axe. Les plans respectifs de ces enroulements sont alternativement inclinés d'un côté et de l'autre dudit axe de sorte que l'ensemble des enroulements engendre à la fois des champs magnétiques d'oscillation ($B_T$) et de guidage ($B_P$) des particules lorsque ces enroulements sont alimentés en courant électrique de telle façon qu'ils présentent la même polarité magnétique d'un même côté dudit axe.

Application à l'amplification de micro-ondes et au laser à électrons libres.

. FIG. 4

EP 0 353 153 A1

**Description**

## DISPOSITIF D'OSCILLATION ET DE GUIDAGE MAGNETIQUES DE PARTICULES CHARGEES, DESTINE A L'AMPLIFICATION D'UN RAYONNEMENT ELECTROMAGNETIQUE

La présente invention concerne un dispositif d'oscillation et de guidage magnétiques de particules chargées, destiné à l'amplification d'un rayonnement électromagnétique. Elle s'applique notamment à la réalisation d'un système d'amplification de micro-ondes ou d'un laser à électrons libres.

Des indications sur ces systèmes sont données en particulier dans l'article de J.M. ORTEGA et M. BILLARDON auquel on pourra se reporter et qui est intitulé "Le laser à électrons libres" et publié dans la revue Pour la Science, avril 1986, pp. 91 à 100.

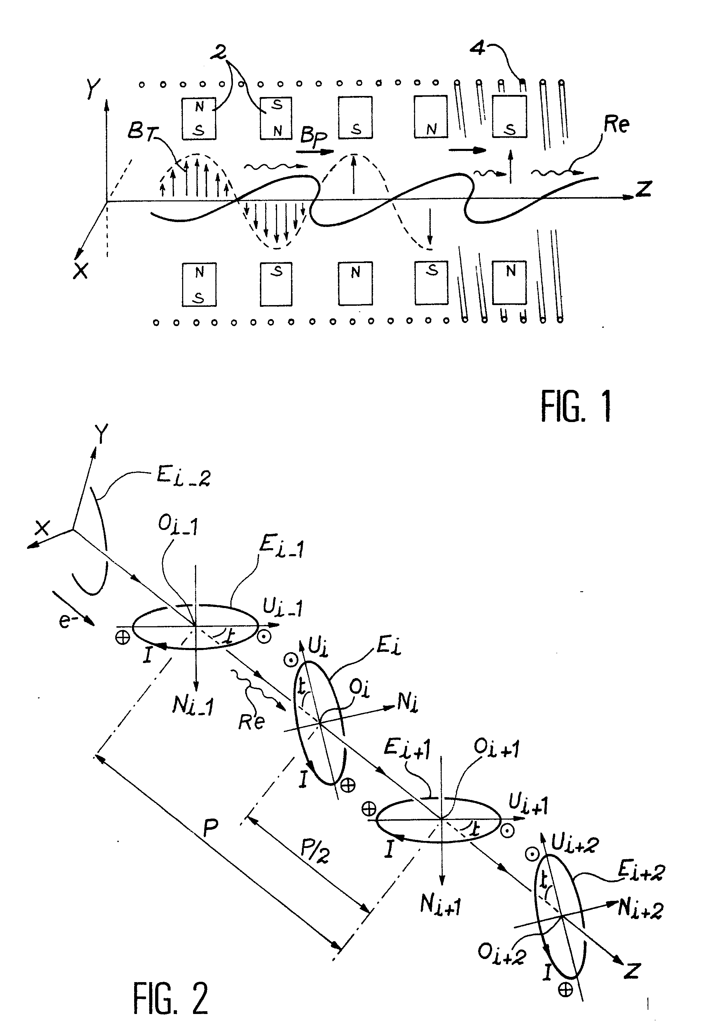

On sait que dans de tels systèmes, un champ magnétique $B_T$ variable périodiquement, appliqué transversalement à l'axe Z de propagation d'un faisceau d'électrons relativistes, permet de transférer l'énergie de ces derniers à un rayonnement électromagnétique cohérent Re sous certaines conditions. Les électrons sont contraints d'effectuer des oscillations dans un plan XZ perpendiculaire au champ magnétique $B_T$, celui-ci restant parallèle à un axe Y qui est perpendiculaire au plan XZ comme on le voit sur la figure 1.

Il est connu d'engendrer ces oscillations au moyen d'aimants permanents 2 qui sont disposés périodiquement le long de l'axe Z et dont les pôles nord N et sud S sont alternés (voir la figure 1). On obtient ainsi le champ magnétique $B_T$ variable le long de l'axe Z et parallèle à l'axe Y qui est perpendiculaire à Z, ce dernier étant perpendiculaire à X.

On sait également que le même résultat peut être obtenu au moyen de bobines électromagnétiques (non représentées) disposées alternativement en sens inverse le long de l'axe Z (trajectoire moyenne des électrons), les axes de ces bobines étant tous parallèles à l'axe Y.

On obtient ainsi les oscillations voulues. Cependant, le faisceau d'électrons ne se propage pas convenablement dans ces conditions en raison de phénomènes de charges d'espace et de diverses instabilités. Il faut adjoindre au dispositif d'ondulation (constitué par les aimants permanents ou par les bobines électromagnétiques) un dispositif de guidage qui est généralement constitué par un ensemble de quadrupôles magnétiques ou par un solénoïde 4 qui produit un champ magnétique $B_P$ parallèle à l'axe Z de propagation des électrons.

Les systèmes connus d'oscillation et de guidage sont donc compliqués et coûteux puisqu'ils nécessitent deux dispositifs distincts, l'un pour l'oscillation et l'autre pour le guidage.

La présente invention a pour but de remédier à cet inconvénient en proposant un dispositif unique, apte à produire à la fois le champ magnétique d'oscillation $B_T$ et le champ magnétique de guidage $B_P$.

De façon précise, la présente invention a pour objet un dispositif d'oscillation et de guidage magnétiques, le long d'un axe, de particules chargées, destiné à l'amplification d'un rayonnement électromagnétique, ce dispositif étant caractérisé en ce qu'il comprend une succession d'enroulements plans électriquement conducteurs le long dudit axe, chaque enroulement entourant ce dernier, les plans respectifs des enroulements étant alternativement inclinés d'un côté et de l'autre dudit axe, de sorte que l'ensemble des enroulements engendre à la fois des champs magnétiques d'oscillation et de guidage des particules lorsque ces enroulements sont alimentés en courant électrique de telle façon qu'ils présentent la même polarité magnétique d'un même côté dudit axe.

Le dispositif objet de l'invention peut avoir un pas constant ou bien peut avoir, de façon avantageuse, un pas continûment variable, le pas étant la distance qui sépare deux enroulements du dispositif, qui sont de rang impair et qui sont séparés par un seul enroulement (de rang pair), le premier enroulement du dispositif étant par exemple celui qui est rencontré en premier par les particules lorsqu'elles entrent dans le dispositif.

Dans le dispositif objet de l'invention, chaque enroulement peut former un court solénoïde ou une spirale.

En outre, les enroulements peuvent être montés en série ou en parallèle ou bien l'ensemble des enroulements peut être organisé en groupes d'enroulements adjacents, les enroulements de chaque groupe étant montés en série et les groupes étant montés en parallèle.

De plus, dans le dispositif objet de l'invention, chacun des enroulements de rang pair qui a deux plus proches voisins peut en être équidistant.

Enfin, comme on l'a déjà mentionné, les particules chargées peuvent être des électrons.

La présente invention sera mieux comprise à la lecture de la description qui suit d'exemples de réalisation donnés à titre purement indicatif et nullement limitatif, en référence aux dessins annexés sur lesquels :

- la figure 1 est une vue schématique d'un dispositif connu d'oscillation et de guidage de particules chargées, destiné à l'amplification d'un rayonnement électromagnétique et a déjà été décrite,

- les figures 2 et 3 illustrent schématiquement et partiellement un dispositif conforme à l'invention,

- les figures 4 et 5 illustrent schématiquement des enroulements utilisables dans l'invention,

- les figures 6 et 7 représentent respectivement les variations, en fonction de Z, des champs $B_T$ et $B_P$ que l'on obtient avec des enroulements de type "solénoïde court" agencés conformément à l'invention,

- la figure 8 représente schématiquement un dispositif conforme à l'invention, à pas continûment variable, et

- les figures 9 à 11 représentent des dispositifs conformes à l'invention, comportant des enroulements montés en série (figure 9), en parallèle (figure 10), ou organisés en groupes d'enroulements, ces enroulements étant en série et les groupes en parallèle (figure 11).

Sur la figure 2, on a représenté schématiquement et partiellement un dispositif conforme à l'invention. Ce dispositif comprend une pluralité d'enroulements plans électriquement conducteurs qui s'étendent le long de l'axe Z (trajectoire moyenne des électrons). Chaque enroulement entoure cet axe Z. Seuls quelques enroulements Ei-2, Ei-1, Ei, Ei+1 et Ei+2 sont représentés sur la figure 2. Chaque enroulement est symbolisé par une spire circulaire fermée sur elle-même, ce qui n'est bien entendu pas le cas dans la réalité puisque les enroulements doivent être alimentés en courant électrique (par des moyens non représentés).

Lorsque le dispositif fonctionne, chaque enroulement est parcouru par un courant électrique I dont le sens est le même pour tous les enroulements : si l'on observe le dispositif dans le sens des Z croissants par exemple (sens de la progression des particules dans le dispositif), tous les enroulements présentent la même polarité magnétique à l'observateur qui voit ainsi soit les faces nord des enroulements, soit les faces sud de ceux-ci.

Le centre de chaque enroulement, noté Oi pour Ei, est sur l'axe Z et l'on définit, pour chaque enroulement, un axe normal noté Ni pour Ei, qui passe par le centre de cet enroulement, est perpendiculaire au plan de ce dernier et orienté dans le sens du champ magnétique qui existerait au centre de l'enroulement si ce dernier était seul. Les axes ainsi définis Ni, Ni+1, Ni+2, ... sont dans le plan YZ.

On définit également, pour chaque enroulement, un autre axe noté Ui pour Ei, qui passe par le centre de l'enroulement, est dans le plan YZ et perpendiculaire à l'axe normal correspondant.

Les enroulements sont disposés de façon que leurs plans soient alternativement inclinés d'un côté et de l'autre de l'axe Z avec une inclinaison constante : chacun de ces plans ou des axes Ui, Ui+1, Ui+2, ... fait le même angle aigu t avec l'axe Z et les axes normaux respectifs des enroulements sont alternativement dans l'un des demi-espaces délimités par le plan XZ et dans l'autre de ces demi-espaces.

Dans l'exemple représenté sur la figure 2, le dispositif a un pas P constant. Ainsi, deux enroulements inclinés du même côté de Z et séparés par un seul enroulement, sont séparés par une distance P et l'enroulement qui les sépare est équidistant de ces deux enroulements : en considérant par exemple Ei-1, Ei et Ei+1, la distance de Oi-1 à Oi+1 vaut P et la distance de Oi-1 à Oi est égale à la distance de Oi à Oi+1 qui est égale à P/2.

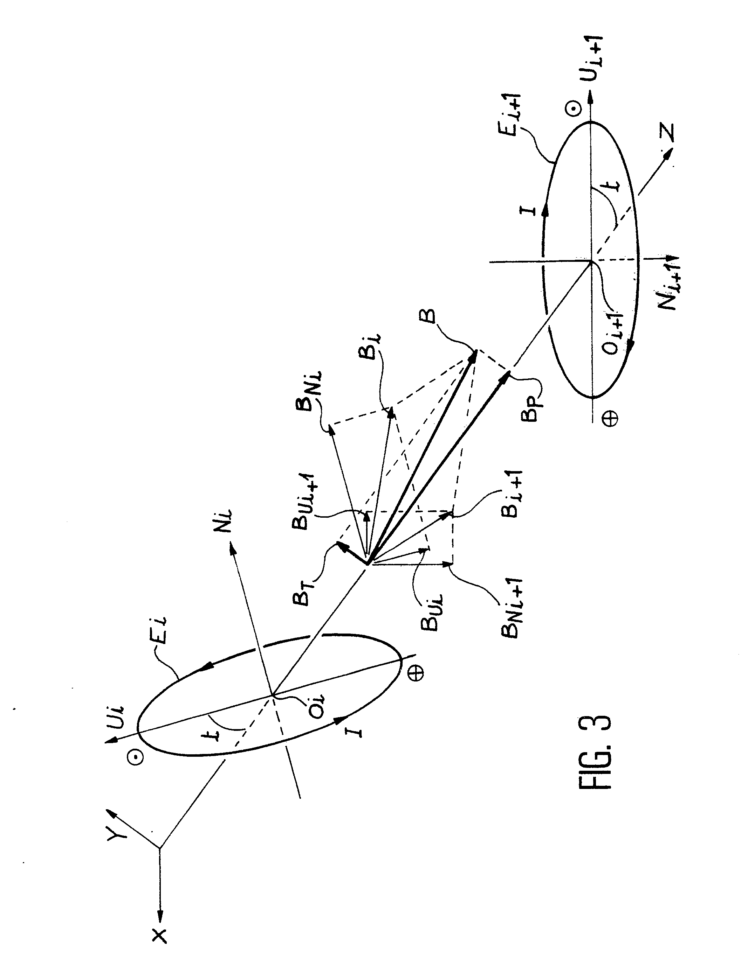

Sur la figure 3, on a construit le champ magnétique B résultant, en un point de Z, de deux enroulements adjacents tels que Ei et Ei+1. Le champ Bi engendré par Ei a une composante $B_{Ni}$ parallèle à Ni et une composante $B_{Ui}$ parallèle à Ui. De même, le champ Bi+1 engendré par Ei+1 a une composante $B_{Ni+1}$ parallèle à Ni+1 et une composante $B_{Ui+1}$ parallèle à Ui+1. Le champ B résulte de la composition de Bi et Bi+1 et se décompose en $B_T$ (parallèle à Y) et $B_P$ (parallèle à Z).

On voit donc que, conformément à l'invention, on obtient, avec un dispositif unique, à la fois le champ d'oscillation $B_T$, qui est parallèle à Y et dont l'intensité varie de façon sinusoïdale dans le plan YZ, et le champ de guidage $B_P$ qui est parallèle à Z et conserve le même sens en tout point de Z.

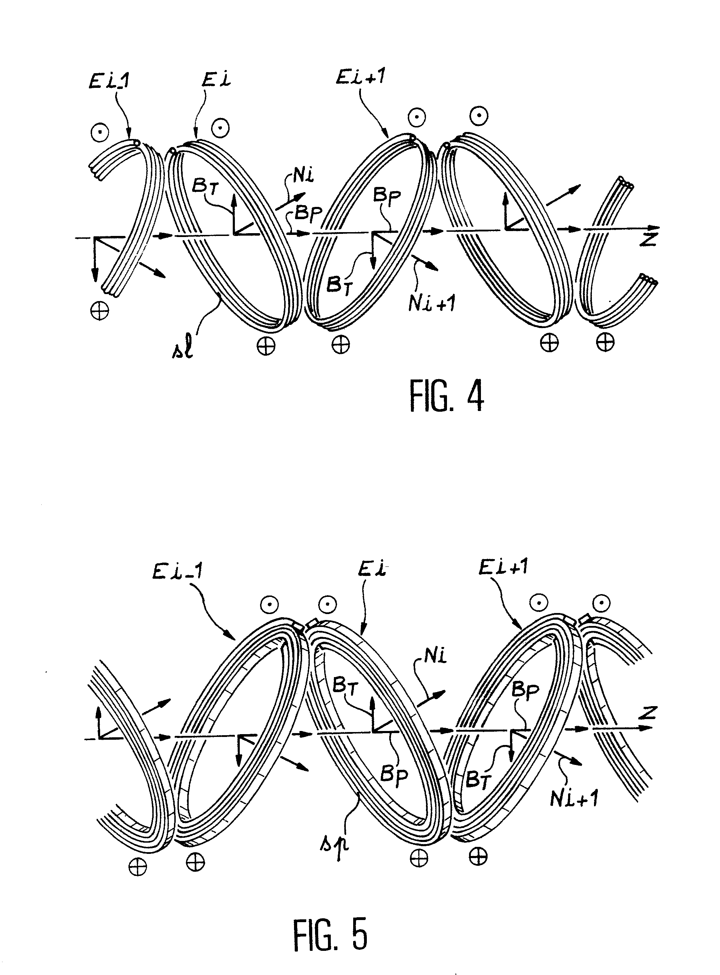

Chacun des enroulements peut être un solénoïde très court, et donc quasiment plat, ne comportant que quelques spires, moins de 10 spires par exemple (voir la figure 4 sur laquelle les moyens d'alimentation des enroulements en courant électrique ne sont pas représentés).

En variante, chaque enroulement peut être en spirale avec quelques tours de conducteur électrique, moins de 10 tours par exemple (voir la figure 5 sur laquelle les moyens d'alimentation des enroulements en courant électrique ne sont pas représentés).

Par ailleurs, chaque enroulement plan, observé perpendiculairement à son plan, peut être constitué de spires circulaires ou carrées ou rectangulaires par exemple.

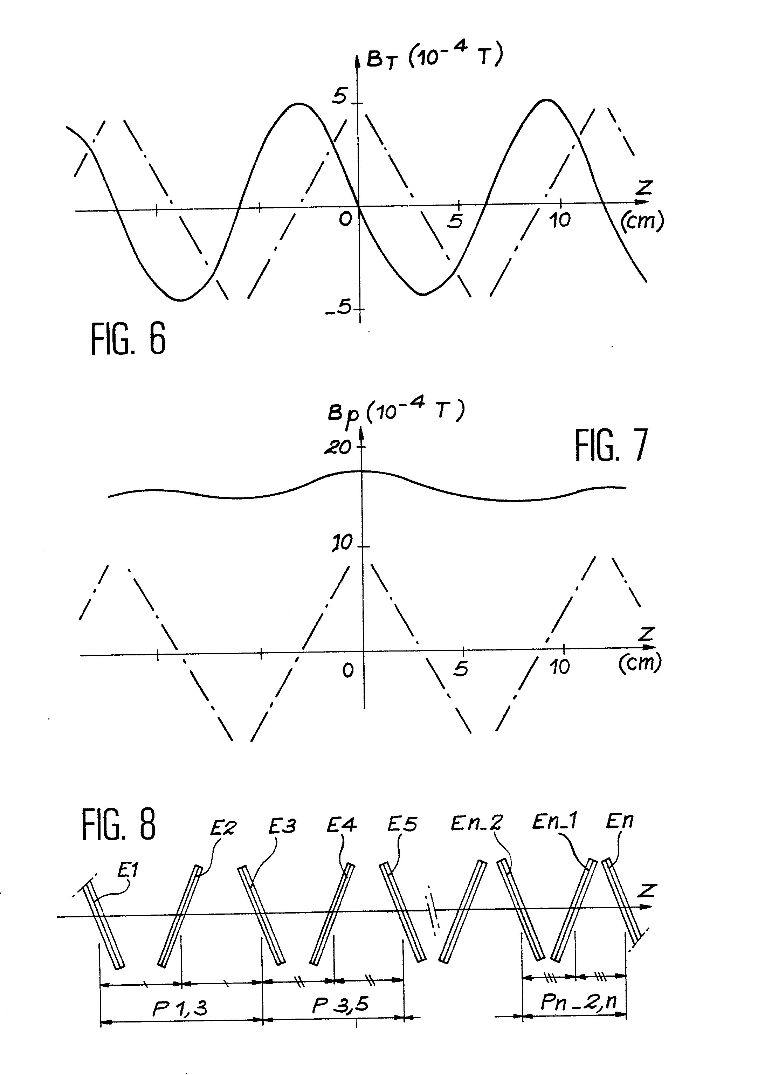

Dans un exemple de réalisation (donné à titre purement indicatif et nullement limitatif) I=20A, t=60°, chaque enroulement est un solénoïde de 4 spires (du genre de ceux de la figure 4), de 10 cm de diamètre intérieur, et l'on n'utilise que 6 solénoïdes. Les variations du champ $B_T$ correspondant, en fonction de Z, sont représentées sur la figure 6 et les variations du champ $B_P$ correspondant, en fonction de Z, sont représentées sur la figure 7.

L'utilisation de courants impulsionnels élevés, dont l'intensité peut aller de plusieurs kA à plusieurs dizaines de kA et dont les impulsions peuvent avoir une période de l'ordre de 1 ms à quelques ms par exemple, permet d'obtenir des champs magnétiques intenses, de l'ordre de 1T, voire plus.

La technique utilisée dans la présente invention autorise la construction de bobines de grand diamètre intérieur par rapport au diamètre du faisceau de particules chargées. Cette technique permet également l'utilisation d'inclinaisons peu importantes (angles aigus t importants), qui sont compatibles avec une faible distance entre deux enroulements adjacents dans le dispositif objet de l'invention.

En outre, le pas P de ce dispositif n'est pas nécessairement constant, il peut être, de façon avantageuse, continûment variable le long de l'axe Z (voir la figure 8 sur laquelle les moyens d'alimentation des enroulements en courant électrique ne sont pas représentés). En effet, les particules chargées telles que des électrons, qui passent dans le dispositif selon l'invention (onduleur) y perdent de l'énergie au fur et à mesure qu'elles progressent suivant l'axe Z. L'accord de phase entre les particules n'est plus respecté. Un pas continûment variable permet de compenser ceci, c'est-à-dire de maintenir l'accord de phase. A cet effet, on fait décroître le pas dans le sens des Z croissants (sens de la progression des particules dans le dispositif). En effet, la longueur d'onde l du rayonnement que l'on veut amplifier est sensiblement égale à :
$$(1/2).P.(1-(v/c)^2).(1+(K^2/2)) \text{ avec } K = 93,4 \, B_T.P$$
P étant exprimé en mètres, $B_T$ en teslas, v (vitesse des électrons) en m/s et c (vitesse de la lumière dans le vide) en m/s.

Par conséquent, si l'énergie des électrons diminue (d'où une diminution de leur vitesse v), il faut diminuer P pour que I demeure constant.

C'est ce que l'on voit sur la figure 8 : le dispositif schématiquement représenté sur cette figure comporte n enroulements E1,..., En (n étant supposé impair par exemple) et les pas P1,3 (distance de E1 à E3), P3,5 (distance de E3 à E5)... Pn-2,n (distance de En-2 à En) forment une suite décroissante dans le sens de l'axe Z.

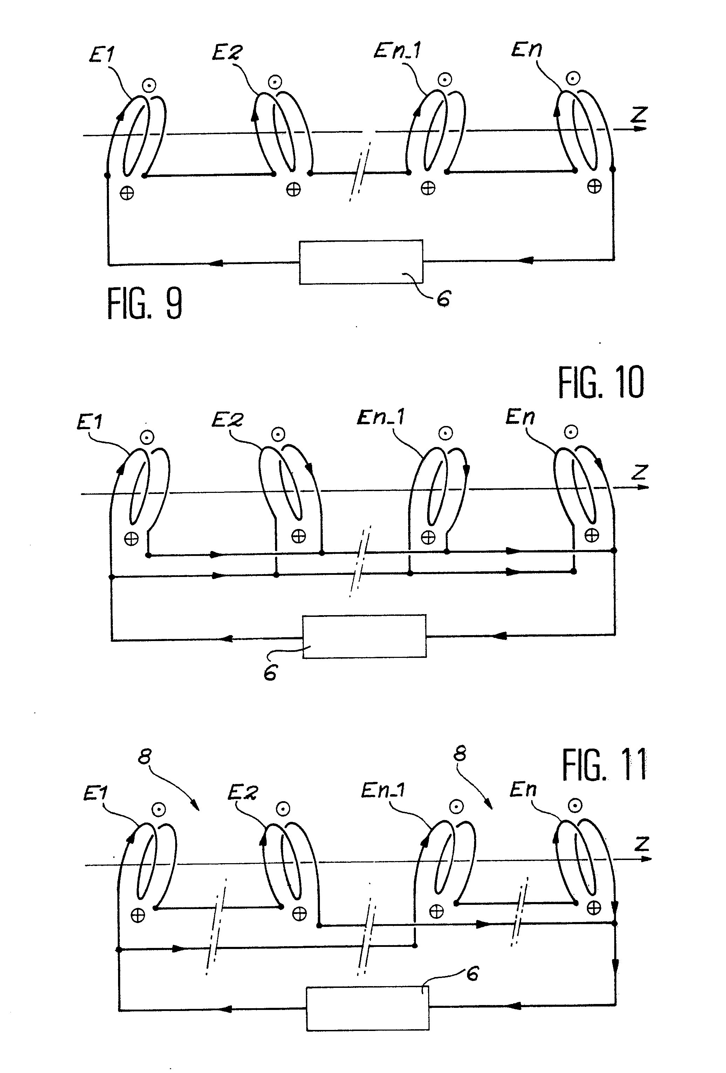

Enfin, on peut monter les enroulements en série (figure 9) en vue d'alimenter l'ensemble ainsi obtenu par un générateur impulsionnel de courant 6. On notera que l'on peut comparer cet ensemble à un solénoïde dont les spires sont réparties en groupes de spires adjacentes et jointives, ces groupes étant non jointifs et inclinés alternativement d'un côté et de l'autre de l'axe Z.

En variante, les enroulements sont montés en parallèle (figure 10) et alimentés par le générateur 6.

Dans une autre variante, on forme des groupes 8 d'enroulements adjacents, dans chaque groupe les enroulements sont montés en série et les différents groupes sont montés en parallèle et alimentés par le générateur 6 (figure 11).

Le dispositif objet de l'invention se prête donc bien aux adaptations du champ magnétique $B_T$ et de la distance entre deux enroulements adjacents le long de l'axe de propagation Z des particules.

Les configurations réalistes envisageables conduisent à une distance d entre deux enroulements adjacents qui peut aller de quelques centimètres à une vingtaine de centimètres par exemple. Le diamètre intérieur di des spires, quant à lui, est susceptible de varier dans la même plage de valeurs. Les valeurs minimales de cette distance d et de ce diamètre di sont dépendantes de la dimension transverse du faisceau de particules. Les maxima de la distance d et du diamètre di sont tributaires des intensités des champs magnétiques souhaités et de l'intensité du courant d'alimentation réalisable.

Les ordres de grandeur précédents montrent que le dispositif de l'invention est applicable à l'amplification, au moyen de particules chargées telles que les électrons, d'ondes électromagnétiques dont les longueurs d'ondes peuvent aller de quelques centimètres (d'où une fréquence de l'ordre de quelques GHz) à quelques micromètres, en fonction de l'énergie des électrons bien entendu. Les applications de l'invention concernent donc une gamme très étendue de systèmes couvrant les systèmes d'amplification de micro-ondes et les lasers à électrons libres.

En revenant au cas de l'utilisation d'un générateur impulsionnel de courant, on notera que la durée d'une impulsion de courant engendrée par ce générateur doit être supérieure à la durée de la bouffée de particules, ou du train de bouffées de particules, qui traverse l'onduleur. Il faut en effet que les champs $B_T$ et $B_P$ soient constants dans le temps pendant la durée de cette bouffée ou de ce train de bouffées (on sait que chaque bouffée envoyée dans l'onduleur s'y structure en paquets de particules, par interaction avec le rayonnement électromagnétique). A titre purement indicatif et nullement limitatif, si la durée de la bouffée de particules, ou du train de bouffées de particules, est de l'ordre de 1 microseconde, il suffit de maintenir constants les champs $B_T$ et $B_P$ pendant environ 1 ms.

Toutefois, dans le cas particulier d'enroulements supraconducteurs, on peut utiliser un générateur de courant continu en vue de produire les champs Bet $B_T$. On notera que ceux-ci doivent être au moins égaux à 0,1 T dans le cas d'un laser à électrons libres (utilisant des bouffées d'électrons ou un faisceau continu d'électrons).

**Revendications**

1. Dispositif d'oscillation et de guidage magnétiques, le long d'un axe (Z), de particules chargées, destiné à l'amplification d'un rayonnement électromagnétique (Re), ce dispositif étant caractérisé en ce qu'il comprend une succession d'enroulements plans électriquement conducteurs (E1,..., En) le long dudit axe, chaque enroulement entourant ce dernier, les plans respectifs des enroulements étant alternativement inclinés d'un côté et de l'autre dudit axe, de sorte que l'ensemble des enroulements engendre à la fois des champs magnétiques d'oscillation ($B_T$) et de guidage ($B_P$) des particules lorsque ces enroulements sont alimentés en courant électrique de telle façon qu'ils présentent la même polarité magnétique d'un même côté dudit axe.

2. Dispositif selon la revendication 1, caractérisé en ce que ce dispositif a un pas continûment variable.

3. Dispositif selon l'une quelconque des revendications 1 et 2, caractérisé en ce que chaque enroulement forme un court solénoïde (sl).

4. Dispositif selon l'une quelconque des revendications 1 et 2, caractérisé en ce que chaque enroulement forme une spirale (sp).

5. Dispositif selon l'une quelconque des revendications 1 à 4, caractérisé en ce que les enroulements (E1,..., En) sont montés en série.

6. Dispositif selon l'une quelconque des revendications 1 à 4, caractérisé en ce que les enroulements (E1,..., En) sont montés en parallèle.

7. Dispositif selon l'une quelconque des revendications 1 à 4, caractérisé en ce que l'ensemble des enroulements est organisé en groupes (8) d'enroulements adjacents, les enroulements de chaque groupe étant montés en série et les groupes étant montés en parallèle.

8. Dispositif selon l'une quelconque des revendications 1 à 7, caractérisé en ce que chacun des enroulements de rang pair qui a deux plus proches voisins en est équidistant.

9. Dispositif selon l'une quelconque des revendications 1 à 8, caractérisé en ce que les particules sont des électrons.

FIG. 1

FIG. 2

FIG. 3

FIG. 4

FIG. 5

FIG. 6

FIG. 7

FIG. 8

FIG. 9

FIG. 10

FIG. 11

# DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 283 687  (MADEY et al.)<br>* Figures 1,2,4a,b; colonne 1, lignes 46-50; colonne 2, lignes 25-32 *<br>--- | 1 | H 01 S    3/09<br>H 01 S    1/00<br>H 05 H    7/04 |
| A | US-A-3 822 410  (MADEY)<br>* Figures 6,7; colonne 10, lignes 60-63; colonne 11, lignes 15-64 *<br>--- | 2,8 | |
| A | US-A-4 644 548  (GOLD et al.)<br>* Figure 3; colonne 1, lignes 17-25; colonne 1, lignes 46-61; colonne 3, lignes 9-14; colonne 4, lignes 14-20; colonne 6, lignes 27-38; colonne 7, lignes 17-21 *<br>--- | 1,2 | |
| A | US-A-4 542 510  (BLACK, Jr.)<br>* Figure 1; colonne 2, lignes 17-62 *<br>----- | 1 | |

**DOMAINES TECHNIQUES RECHERCHES (Int. Cl.5)**

H 05 H
H 01 S
G 21 K
H 01 J

Le présent rapport a été établi pour toutes les revendications

| Lieu de la recherche | Date d'achèvement de la recherche | Examinateur |
|---|---|---|
| LA HAYE | 07-11-1989 | FRITZ S.C. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
......................................................................
& : membre de la même famille, document correspondant

EPO FORM 1503 03.82 (P0402)